# EUROPÄISCHE PATENTSCHRIFT

(11) **EP 1 480 864 B1**
(45) Veröffentlichungstag und Bekanntmachung des Hinweises auf die Patenterteilung: **06.12.2006**
(21) Anmeldenummer: 03704633.1
(22) Anmeldetag: 17.02.2003
(51) Int. Cl.: B62D 5/06, B62D 5/04

(54) **HYDRAULISCHE SERVOLENKUNG**
HYDRAULIC POWER ASSISTED STEERING SYSTEM
DIRECTION ASSISTEE HYDRAULIQUE

(30) Priorität: 27.02.2002 DE 10208519; 03.12.2002 DE 10256306
(43) Veröffentlichungstag der Anmeldung: 01.12.2004
(73) Patentinhaber: Continental Teves AG & Co. oHG, 60488 Frankfurt am Main (DE)
(72) Erfinder: BÖHM, Jürgen, 65558 Oberneisen (DE); LINKENBACH, Steffen, 65760 Eschborn (DE); HOFFMANN, Oliver, 60486 Frankfurt (DE); NELL, Joachim, 63452 Hanau (DE); SCHIRLING, Andreas, 64319 Pfungstadt (DE); MUTH, Norman, 35066 Frankenberg (DE); GÖRLACH, Johannes, 35428 Langgöns (DE)
(86) Internationale Anmeldenummer: PCT/EP2003/001552
(87) Internationale Veröffentlichungsnummer: WO 2003/072418

(56) Entgegenhaltungen:
- EP-A- 0 580 997
- EP-A- 1 142 746
- DE-A- 19 911 892

## Beschreibung

Die Erfindung betrifft eine hydraulische Servolenkung mit einem Lenkgetriebe und mit einem hydraulischen Aktuator zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind.

Heutige Kraftfahrzeuge, insbesondere Personenkraftwagen, sind in der Regel mit hydraulischen oder elektrohydraulischen Servolenkungen ausgestattet, im folgenden als "hydraulische Servolenkungen" bezeichnet. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt (Momentenunterstützung). Das zum Lenken des Fahrzeugs aufzubringende Moment wird so verringert und der Fahrer bei der Lenktätigkeit entlastet.

Es ist bekannt, die Momentenunterstützung oder die Verstärkung der Lenkung geschwindigkeitsabhängig auszulegen. Bei niedrigen Fahrzeuggeschwindigkeiten, wie sie für das Einparken oder Ausparken typisch sind, wird eine sehr leichtgängige Lenkung mit einer großen Momentenunterstützung bevorzugt, während bei schneller Fahrt eine schwergängigere Lenkung mit geringer Momentenunterstützung wünschenswert ist.
Aus der EP 0580 997 A1 ist eine Servolenkung eines Kraftfahrzeugs bekannt, der eine elektromechanische Hilfslenkung zugeordnet ist. Über eine Kupplung kann die Hilfslenkung mit der Lenkradwelle verbunden werden.

Aufgabe der Erfindung ist es, eine hydraulische Servolenkung anzugeben, die es ermöglicht, eine variable Momentenunterstützung vorzusehen und dabei einfach in bereits vorhandene hydraulische Servolenkungen integrierbar ist.

Diese Aufgabe wird mit den Merkmalen der unabhängigen Ansprüche gelöst. Abhängige Ansprüche sind auf bevorzugte Ausführungsformen der Erfindung gerichtet.

Unter dem Begriff "Lenkrad" sind hier alle denkbaren Betätigungseinrichtungen zum Lenken eines Fahrzeugs, wie Lenkhandrad, Steuerknüppel oder "Joystick", zu verstehen.

Wesentlich für die Erfindung ist es, dass die Mittel zur aktiven Aufbringung eines Zusatz-Lenkmoments als eine Einheit ausgebildet sind, die zumindest einen Zusatzmoment-Aktuator und ein Erfassungsmittel für das Lenkmoment umfassen und als ein Modul an einer Lenkradwelle angeordnet sind, welche das Lenkrad mit dem Lenkgetriebe verbindet.

Erfindungsgemäß ist es vorgesehen, dass der Zusatzmoment-Aktuator einen Elektromotor aufweist, welcher an der Lenksäule angekoppelt ist.

Erfindungsgemäß ist es vorgesehen, dass die Mittel zur aktiven Aufbringung eines Zusatz-Lenkmoments einen Elektromotor, eine redundante elektronische Steuerungs- und Regelungseinheit (ECU) und einen redundanten Lenkradmomentensensor aufweisen.

Es ist erfindungsgemäß vorgesehen, dass die Mittel zur aktiven Aufbringung eines Zusatz-Lenkmoments ein Getriebe aufweisen, das mit dem Zusatzmoment-Aktuator zusammenwirkt.

Nach der Erfindung ist das Getriebe ein Riemengetriebe, ein Schrauben-/Schneckengetriebe oder ein Stirnradgetriebe, vorzugsweise ein Riemengetriebe.

Erfindungsgemäß ist es vorgesehen, dass der Zusatzmoment-Aktuator mittels Ansteuerung durch eine elektronische Steuerungs- und Regelungseinheit (ECU) ein an die aktuelle Fahrzeuggeschwindigkeit angepasstes Zusatz-Lenkradmoment erzeugt.

Nach der Erfindung ist es vorgesehen, dass der Zusatzmoment-Aktuator mittels Ansteuerung durch eine elektronische Steuerungs- und Regelungseinheit (ECU) ein an Fahrzeugkurs und den Fahrbahnverlauf angepasstes Zusatz-Lenkradmoment erzeugt.

Dazu sind vorzugsweise ein Sollbahnerfassungsmittel zum Ermitteln einer Sollbahn bzw. eines Sollbahnwinkels aus einem erfassten oder abgeschätzten Fahrbahnverlauf, ein Istbahnerfassungsmittel zum Ermitteln einer Istbahn und eines Istbahnwinkels aus einem erfassten oder abgeschätzten Fahrzeugkurs, ein Vergleichsmittel zum Vergleichen der Sollbahn und des Sollbahnwinkels mit der Istbahn und dem Istbahnwinkel und ein Nullpunktsverschiebemittel vorgesehen, um den Nullpunkt der Kennlinie für die Unterstützung der Lenkhandhabe nach Maßgabe des Vergleichs zu verschieben.

Es ist erfindungsgemäß vorgesehen, dass der Zusatzmoment-Aktuator mittels Ansteuerung durch eine elektronische Steuerungs- und Regelungseinheit (ECU) ein an die aktuelle Fahrzeugdynamik, insbesondere die aktuelle Querbeschleunigung, angepasstes Zusatz-Lenkradmoment erzeugt.

Erfindungsgemäß ist es vorgesehen, dass der Zusatzmoment-Aktuator ein elektromechanischer, elektromagnetischer oder hydraulischer Aktuator ist.

Die Aufgabe wird ebenso durch eine hydraulische Servolenkung gelöst, mit einem Lenkgetriebe und mit einem hydraulischen Aktuator zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind, und die dadurch gekennzeichnet ist, dass die Mittel zur aktiven Aufbringung eines Zusatz-Lenkmoments zumindest einen Zusatzmoment-Aktuator aufweisen und als eine Einheit ausgebildet sind, die als ein Modul an einen lenkradseitigen Endabschnitt des Lenkventils einer hydraulischen Servolenkung angeordnet ist.

Vorzugsweise greift ein Antriebsmittel des Zusatzmoment-Aktuators in eine Verzahnung der Eingangswelle des Lenkventils.

Die Erfindung wird in der nachfolgenden Beschreibung unter Bezugnahme auf die Abbildungen (Fig.1 bis Fig.7) beispielhaft näher erläutert.

Fig.1 zeigt schematisch eine Ausführungsform der erfindungsgemäßen Servolenkung mit einem elektromechanischen Aktuator.

In der Fig.2 ist eine Kennlinie einer Servolenkung dargestellt.

Fig.3 zeigt schematisch eine Ausführungsform der erfindungsgemäßen Servolenkung mit einem hydraulischen Aktuator.

In der Fig.4 ist eine Ausführungsform der erfindungsgemäßen Servolenkung mit einem magnetischen Zusatzmoment-Aktuator dargestellt.

Fig.5 zeigt schematisch einen Querschnitt durch eine Ausführungsform der erfindungsgemäßen elektromechanischen Aktuator-Einheit.

In der Fig.6 ist der elektromechanische Zusatzmoment-Aktuator in einer Explosionszeichnung perspektivisch dargestellt.

Fig.7 zeigt die montierte Einheit des elektromechanischen Zusatzmoment-Aktuators in perspektivischer Darstellung.

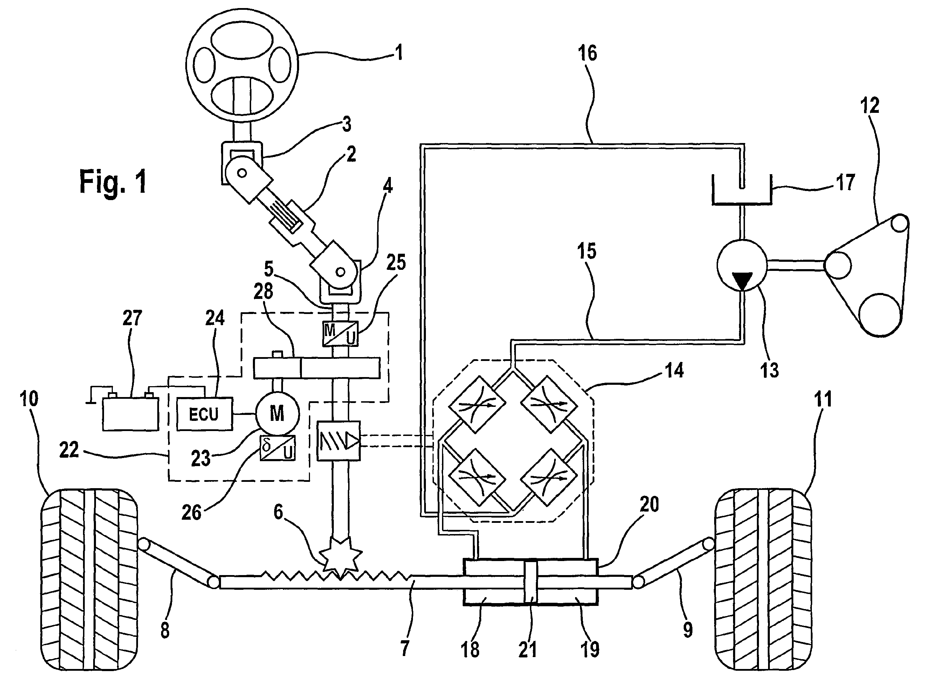

Das in der Fig.1 dargestellte Lenksystem besteht aus einem Lenkrad 1, einer mit dem Lenkrad 1 verbundenen Lenksäule 2 mit 2 Kreuzgelenken 3,4. Die Lenksäule 2 ist verbunden mit oder ein Teil einer Lenkradwelle 5, die über ein Lenkgetriebe 6 und eine Lenkstange 7, hier als Zahnstange 7 ausgebildet, die seitlich an der Zahnstange 7 befestigten Spurstangen 8,9 betätigt, und dadurch ein Verschwenken der Räder 10,11 bewirkt. Bei der hier gezeigten Zahnstangenlenkung wird eine hydraulische Unterstützung mittels einer von dem Antriebsmotor des Fahrzeugs, z.B. über einen Riementrieb 12, angetriebene hydraulische Pumpe 13 realisiert, die unter Druck stehende Druckflüssigkeit zu einem Lenkventil 14 über eine Leitung 15 liefert. Durch eine Rücklaufleitung 16 kann die Druckflüssigkeit zurück in einen Vorratsbehälter 17 strömen. In Geradeausstellung des Lenkrads fließt ein konstanter Ölstrom durch das in Neutralstellung stehende Lenkventil (offenen Mitte) und durch die Rücklaufleitung 16 zurück. Der Druck in 2 Kammern 18,19 eines an der Zahnstange 7 angeordneten Arbeitszylinders 20 ist dann gleich groß. Es erfolgt keine Lenkunterstützung. Beim Drehen des Lenkrads 1 wird die Zahnstange 7 und somit auch der Kolben 21 verschoben. Die Bewegung des Kolbens 21 wird durch den Druck der Druckflüssigkeit unterstützt. Dabei bewirkt das Ventil 14 zugleich, dass Druckflüssigkeit von einer Kammer in die andere Kammer fließt, so dass insgesamt die Lenkbetätigung eine hydraulische Unterstützung erfährt.

Diese oben beschriebene konventionelle hydraulische Servolenkung weist eine Einheit zur Erzeugung eines Zusatz-Moments 22 auf, mit einem Zusatzmoment-Aktuator 23, hier eine Elektromotor 23, einer redundanten Steuerungseinheit ECU 24 zur Ansteuerung des Motors 23 und zur Auswertung von Signalen eines redundanten Lenkmomentensensors 25 und eines Sensors für die Motorlage 26. Die elektronischen Bauteile sind an einer elektrischen Energiequelle 27 angeschlossen. Die Steuerungseinheit ECU 24 und Momentensensor sind vorzugsweise redundant ausgeführt. Hier weist die Einheit 22 auch die Steuerungseinheit ECU 24 auf. Im Sinne der Erfindung kann die Steuerungseinheit ECU 24 aber auch getrennt davon angeordnet sein. Vorzugsweise besteht die Einheit 22 zumindest aus einem Zusatzmoment-Aktuator 23, einem Lenkmomentensensors 25 und ggf. einem Sensor für die Motorlage 26.

Das Lenkradmoment oder Lenkmoment, welches durch die Lenksystemcharakteristik sowie die wirkenden Kräfte definiert ist, kann durch die Einheit zur Erzeugung eines Zusatz-Moments 22 aktiv beeinflusst werden. Dabei wird durch den E-Motor 23 ein Zusatzmoment (Zusatz-Lenkmoment) erzeugt und auf die Lenkstange aufgebracht. Es besteht die Möglichkeit das Moment dem konstruktiv vorgegebenen Lenkradmoment aufzuaddieren oder es von ihm abzuziehen. Die Übertragung des Motormoments kann mit oder ohne Übersetzung direkt oder, wie hier dargestellt, über ein Getriebe 28 erfolgen. Dabei kann ein Riemengetriebe, ein Schrauben-/Schneckengetriebe oder ein Stirnradgetriebe verwendet werden.

Bei Ausfall der Einheit zur Erzeugung eines Zusatz-Moments bleibt die dem Fahrer bekannte Lenkungscharakteristik mit Servounterstützung erhalten. Die Einheit 22 selbst ist dazu fail-silent ausgelegt. Das bedeutet, im Fehlerfall wird diese abgeschaltet.

Mittels der erfindungsgemäßen Einheit zur Erzeugung eines Zusatz-Moments 22 kann vorteilhaft eine konventionelle Servolenkung ohne Modifikationen an der Charakteristik verwendet werden. Die Einheit wird als ein Modul einer konventionellen hydraulischen Servolenkung direkt hinzugefügt, um einen Funktionsgewinn zu erzeugen.

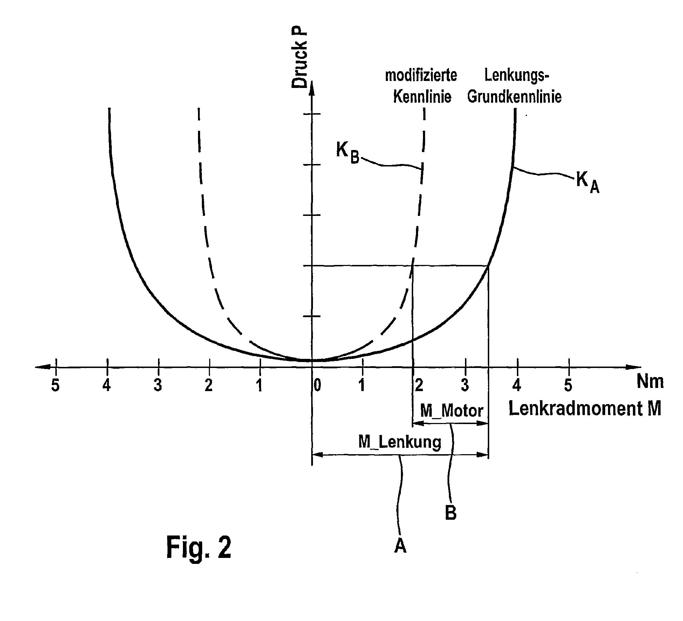

Mit der Erfindung ist es möglich, die Verstärkungskennlinie durch Erzeugung eines Zusatz-Moments zu variieren (siehe Fig.2). Die Verstärkungskennlinie bedeutet hier die Abhängigkeit des Lenkradmoments oder Betätigungsmoments M vom vorhandenen Systemdruck P der hydraulischen Unterstützung. In dem gezeigten Beispiel wird das Moment A (M_Lenkung) durch eine aktive Aufbringung eines Zusatzmoments B (M_Motor) verringert. Das bedeutet, der Fahrer wird in seiner Lenktätigkeit stärker unterstützt. Es resultiert eine modifizierte Kennlinie (gestrichelte Kurve K_{B}) mit einer geringeren Betätigungskraft gegenüber der ursprünglichen Kennlinie (durchgezogene Kurve K_{A}). Es kann darüber hinaus eine aktive Fahrerassistenz realisiert werden. Dabei wird durch eine Momentenanpassung bzw. -variation eine Lenkempfehlung gegeben werden oder dem Fahrer durch eine Momentenüberhöhung das Lenken erschwert, um ihn vor Gefahren zu warnen.

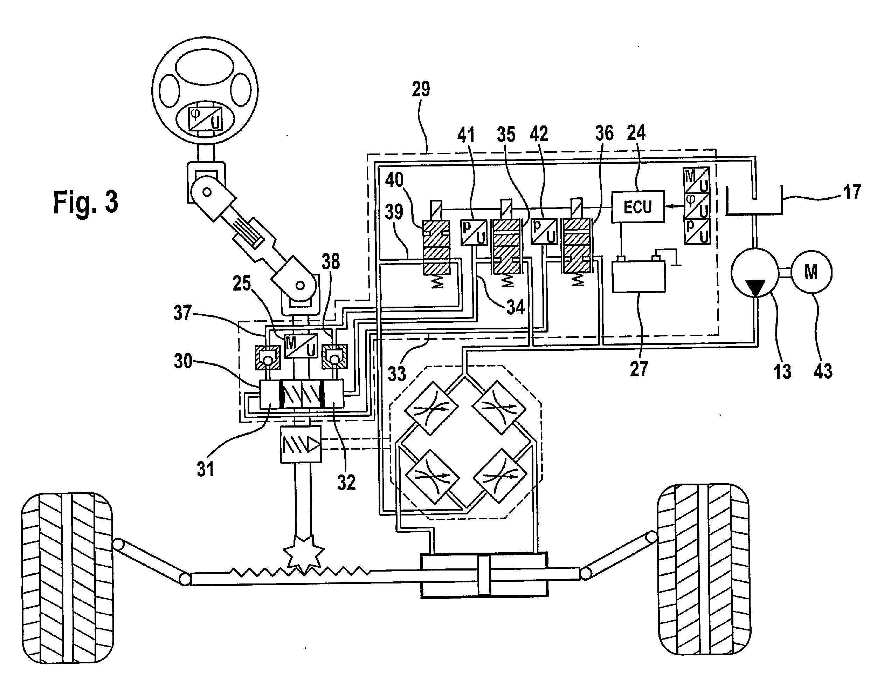

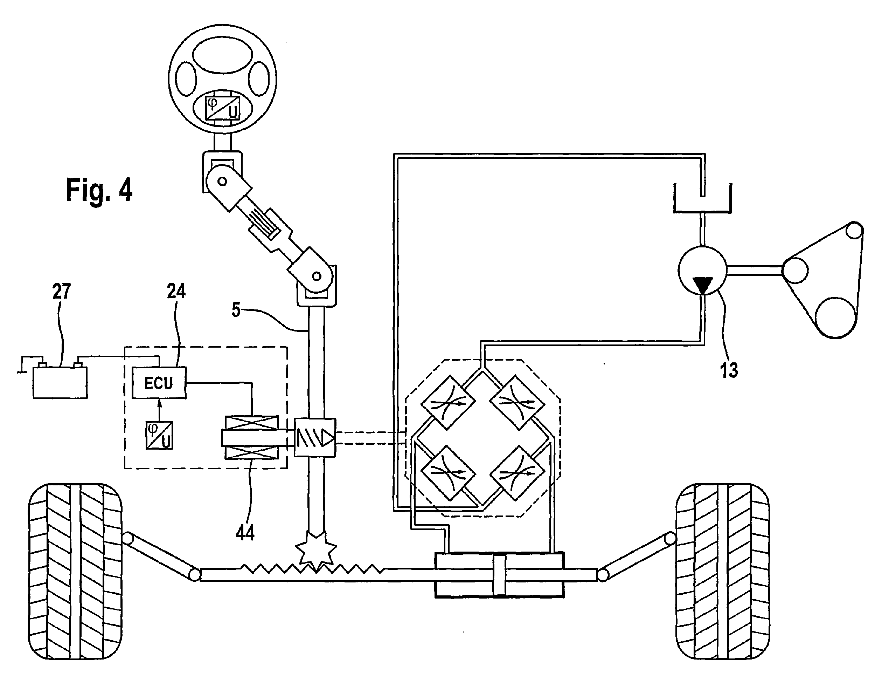

Es ist ebenso möglich, ein Zusatz-Moment durch einen hydraulischen Zusatzmoment-Aktuator (siehe Fig.3) oder durch einen magnetischen Zusatzmoment-Aktuator (siehe Fig.4) zu erzeugen.

Das Grund-Lenksystem mit hydraulischer Unterstützung ist identisch zu dem in Fig.1 gezeigten System und wird daher nicht mehr im einzelnen erläutert.

Bei dem in Fig.3 dargestellten System wird das Zusatz-Moment durch eine Einheit 29 mit einem hydraulischen Zusatzmoment-Aktuator 30 erzeugt.

Der hydraulische Zusatzmoment-Aktuator 30 weist 2 hydraulische Kammern 31,32 auf, die mit einer unter Druck stehenden Druckflüssigkeit beaufschlagbar sind über hydraulische Leitungen 33,34, in die jeweils ein hydraulisches, elektromagnetisch betätigbares Ventil 35,36 eingefügt ist. Aus den hydraulischen Kammern 31,32 kann die Druckflüssigkeit über Leitungen 37,38, in die jeweils ein Rückschlagventil eingefügt ist und eine daran anschließende, gemeinsame Leitung 39, in die ein hydraulisches, elektromagnetisch betätigbares Ventil 40 eingefügt ist, in den Vorratsbehälter 17 rückgeführt werden.

Die Ventile 35,36,40 werden zwecks Druckregelung in den Kammern 32,32 und somit zur Regelung des Zusatz-Moments von einer vorzugsweise redundanten Steuerungseinheit ECU 24 angesteuert, nach Maßgabe der Signale des redundanten Lenkmomentensensors 25 sowie von zwei Drucksensoren 41,42.

Vorzugsweise wird hier die Pumpe nicht (zwangsweise) vom Antriebsmotor des Fahrzeugs angetrieben (vgl. Fig.1), sondern von einem eigenen Elektromotor 43. Durch eine entsprechende Ansteuerung des Motors 43 kann die Pumpe 13 den hydraulischen Druck bedarfsgerecht erzeugen, wodurch Energie eingespart werden kann.

Bei der in Fig. 4 dargestellten Ausführungsform wird ein Zusatz-Moment durch einen elektromagnetischen Zusatzmoment-Aktuator 44 erzeugt, der von Steuerungseinheit ECU 24 angesteuert wird.

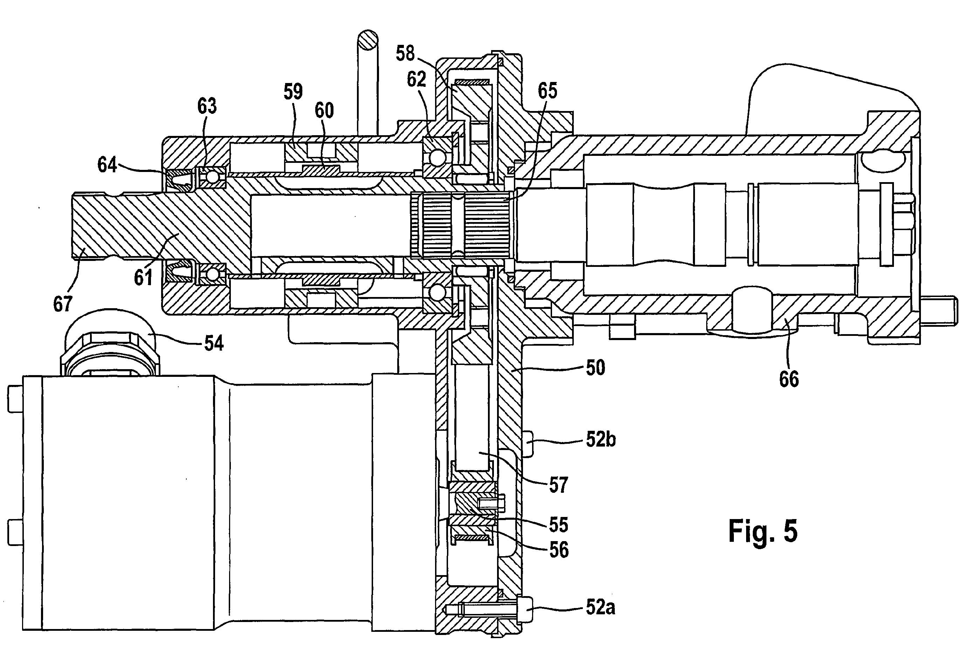

Der in Fig.5 gezeigte elektromechanischen Zusatzmoment-Aktuator weist ein erstes Gehäusebauteil 50 und ein zweites Gehäusebauteil 51 auf, die miteinander verbunden sind über eine Verschraubung 52a, 52b. An dem Gehäusebauteil 51 ist ein Elektromotor 53 angeordnet, der durch einen elektrischen Anschluss 54 mit einer Steuereinheit und Stromversorgung verbunden ist. Die Ausgangswelle 55 des Motors 53 ist verbunden mit einer ersten Riemenscheibe 56, die über einen Riemen, vorzugsweise Zahnriemen 57, mit einer zweiten Riemenscheibe 58 verbunden ist. Die zweite Riemenscheibe 58 besitzt vorzugsweise einen größeren Durchmesser, so dass eine Übersetzung mit einem Verhältnis von 1:2 bis 1:5, vorzugsweise ca. 1:4, erzielt wird. Im zweiten Gehäusebauteil 51 ist ein Momentensensor 59,60 zur Erfassung des Lenkradmoments angeordnet. Dem Sensor 59,60 ist eine Welle 61 zugeordnet, die über Lager 62,63 mit dem zweiten Gehäusebauteil 51 verbunden ist und mittels einer Dichtung 64 (Wellendichtring) abgedichtet ist. Das erste Gehäusebauteil 50 ist vorzugsweise direkt an dem lenkradseitigen Eingang eines Lenkventils 66 angeordnet bzw. mit diesem verbunden. Ein lenkradseitiger Zapfen 65 greift hier mit seiner Verzahnung direkt in entsprechende Gegenstücke (Ausnehmungen) der Welle 61 ein. Der lenkradseitige Endabschnitt 67 der Welle 61 ist wie der Zapfen 65 ausgebildet, so dass daran direkt eine entsprechend verkürzte, mit dem Lenkrad des Fahrzeugs verbundene Lenkradwelle zum Eingriff kommen kann. Durch diese Ausgestaltung kann die Einheit zur Erzeugung des Zusatzmoments vorteilhaft ohne weitere Änderungen an der Lenkanlage in eine "verkürzte" Lenksäule des Fahrzeugs eingebaut werden.

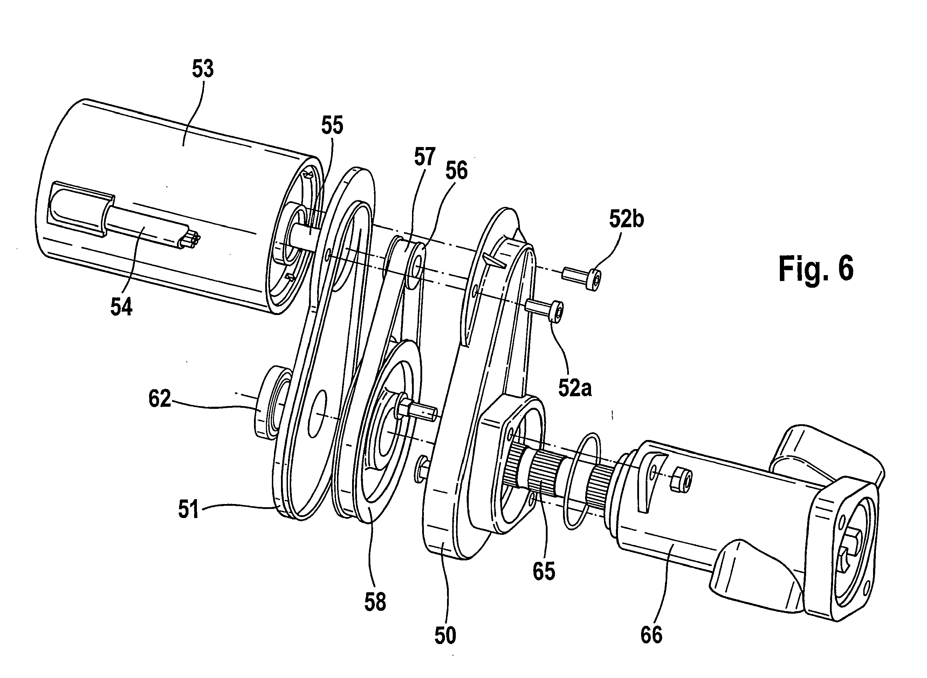

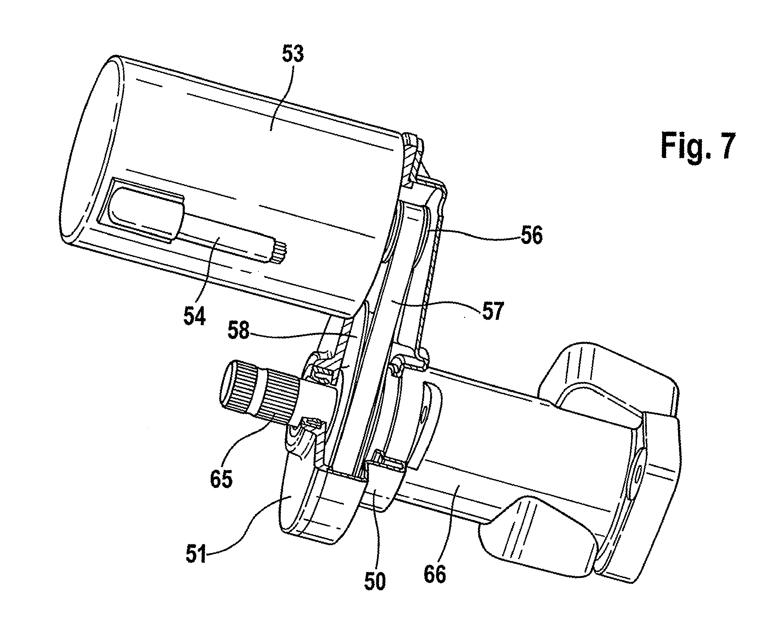

Der elektromechanische Zusatzmoment-Aktuator der in Fig.5 dargestellten Einheit ist in Fig. 6 in einer Explosionszeichnung und in der Fig. 7 als gesamtes Bauteil mit dem Anschluß an das Lenkventil perspektivisch dargestellt. Der Aktuator wird daher im folgenden nicht näher erläutert und es wurden dieselben Bezugszeichen für dieselben Bauteile verwendet. Aus den Abbildungen ist die besonders vorteilhafte kompakte Bauform zu erkennen, die eine leichte Integration in bestehende Lenksysteme ermöglicht. Damit kann der elektromechanische Antrieb - abgesehen von einer Verkürzung der Lenksäule- mit einem sehr geringen technischen Aufwand in bestehende Systeme eingebaut werden. Auch der technische Aufwand für den Zusatzmoment-Aktuator selbst ist relativ gering. Damit ist dieser relativ kostengünstig herzustellen und zudem relativ sicher gegen Störungen oder einen Ausfall.

## Patentansprüche

1. Hydraulische Servolenkung mit einem Lenkgetriebe und mit einem hydraulischen Aktuator (18, 19, 20, 21) zur Unterstützung einer Lenkradbetätigung durch den Fahrer eines Fahrzeugs, insbesondere eines Kraftfahrzeugs, der Mittel (23, 24, 25, 26, 28) zur aktiven Aufbringung eines Zusatz-Lenkmoments zugeordnet sind,
**dadurch gekennzeichnet, dass** die Mittel (23, 24, 25, 26, 28) zur aktiven Aufbringung eines Zusatz-Lenkmoments zumindest einen Zusatzmoment-Aktuator (23, 30, 44) und ein Erfassungsmittel (25) für das vom Fahrer aufgebrachte Lenkmoment aufweisen und als eine Einheit (22, 29) ausgebildet sind, wobei die Einheit (22, 29) als ein Modul an einem lenkradseitigen Endabschnitt eines Lenkventils (14, 66) der hydraulischen Servolenkung angeordnet ist.

2. Servolenkung nach Anspruch 1,
**dadurch gekennzeichnet, dass** der Zusatzmoment-Aktuator (23, 30, 44)einen Elektromotor (23) aufweist, welcher an der Lenksäule (2) angekoppelt ist.

3. Servolenkung nach Anspruch 1 oder 2,
**dadurch gekennzeichnet, dass** die Mittel zur aktiven Aufbringung eines Zusatz-Lenkmoments einen Elektromotor (23), eine redundante elektronische Steuerungs- und Regelungseinheit (ECU) (24) und einen redundanten Lenkradmomentensensor (25) aufweisen.

4. Servolenkung nach einem der Ansprüche 1 bis 3,
**dadurch gekennzeichnet, dass** die Mittel (23, 24, 25, 26, 28) zur aktiven Aufbringung eines Zusatz-Lenkmoments ein Getriebe (28) aufweisen, das mit dem Zusatzmoment-Aktuator (23, 30, 44) zusammenwirkt.

5. Servolenkung nach Anspruch 4,
**dadurch gekennzeichnet, dass** das Getriebe (28) ein Riemengetriebe, ein Schrauben-/Schneckengetriebe oder ein Stirnradgetriebe ist.

6. Servolenkung nach einem der Ansprüche 1 bis 5,
**dadurch gekennzeichnet, dass** der Zusatzmoment-Aktuator (23, 30, 44) mittels Ansteuerung durch eine elektronische Steuerungs- und Regelungseinheit (ECU)(24) ein an die aktuelle Fahrzeuggeschwindigkeit angepasstes Zusatz-Lenkradmoment erzeugt.

7. Servolenkung nach einem der Ansprüche 1 bis 6,
**dadurch gekennzeichnet, dass** der Zusatzmoment-Aktuator (23, 30, 44) mittels Ansteuerung durch eine elektronische Steuerungs- und Regelungseinheit (ECU) (24) ein an Fahrzeugkurs und den Fahrbahnverlauf angepasstes Zusatz-Lenkradmoment erzeugt.

8. Servolenkung nach einem der Ansprüche 1 bis 7,
**dadurch gekennzeichnet, dass** der Zusatzmoment-Aktuator (23, 30, 44) mittels Ansteuerung durch eine elektronische Steuerungs- und Regelungseinheit (ECU)(24) ein an die aktuelle Fahrzeugdynamik, insbesondere die aktuelle Querbeschleunigung, angepasstes Zusatz-Lenkradmoment erzeugt.

9. Servolenkung nach einem der Ansprüche 1 bis 8,
**dadurch gekennzeichnet, dass** der Zusatzmoment-Aktuator (23, 30, 44) ein elektromechanischer, elektromagnetischer oder hydraulischer Aktuator ist.

## Claims

1. Hydraulic power steering system with a steering gear and a hydraulic actuator (18, 19, 20, 21) for supporting a steering wheel actuation by the driver of a vehicle, in particular a motor vehicle, with means (23, 24, 25, 26, 28) being associated therewith for actively applying an additional steering torque,
**characterized in that** the means (23, 24, 25, 26, 28) for actively applying an additional steering torque include at least one additional torque actuator (23, 30, 44) and a means (25) detecting the steering torque applied by the driver and being designed as a unit (22, 29), with the unit (22, 29) being mounted as a module on a steering-wheel-side end portion of a steering valve (14, 66) of the hydraulic power steering system.

2. Power steering system as claimed in claim 1,
**characterized in that** the additional torque actuator (23, 30, 44) includes an electric motor (23) which is coupled to the steering column (2).

3. Power steering system as claimed in claim 1 or 2,
**characterized in that** the means for the active application of an additional steering torque include an electric motor (23), a redundant electronic controlling and regulating unit (ECU) (24), and a redundant steering wheel torque sensor (25).

4. Power steering system as claimed in any one of claims 1 to 3,
**characterized in that** the means (23, 24, 25, 26, 28) for the active application of an additional steering torque include a gear (28) interacting with the additional torque actuator (23, 30, 44).

5. Power steering system as claimed in claim 4,
**characterized in that** the gear (28) is a belt drive, a helical worm gear, or a spur gear.

6. Power steering system as claimed in any one of claims 1 to 5,
**characterized in that** an electronic controlling and regulating unit (ECU) (24) is used to actuate the additional torque actuator (23, 30, 44) in order to produce an additional steering wheel torque that is adapted to the current vehicle speed.

7. Power steering system as claimed in any one of claims 1 to 6,
**characterized in that** the electronic controlling and regulating unit (ECU) (24) is used to actuate the additional torque actuator (23, 30, 44) in order to produce an additional steering wheel torque that is adapted to the vehicle's course and the shape of the road.

8. Power steering system as claimed in any one of claims 1 to 7,
**characterized in that** the electronic controlling and regulating unit (ECU) (24) is used to actuate the additional torque actuator (23, 30, 44) in order to produce an additional steering wheel torque that is adapted to the current vehicle dynamics, in particular the current lateral acceleration.

9. Power steering system as claimed in any one of claims 1 to 8,
**characterized in that** the additional torque actuator (23, 30, 44) is an electromechanical, electromagnetic, or hydraulic actuator.

## Revendications

1. Direction assistée hydraulique comprenant un boîtier de direction et un actionneur hydraulique (18,19, 20, 21) d'assistance d'un actionnement du volant de direction par le conducteur d'un véhicule, en particulier d'un véhicule automobile, à laquelle sont associés des moyens (22, 24, 25, 26, 28) d'application active d'un couple de direction additionnel,
**caractérisée en ce que** les moyens (23, 24, 25, 26, 28) d'application active d'un couple de direction additionnel comprennent au moins un actionneur (23, 30, 40) générateur de couple additionnel et un moyen de détection (25) du couple de direction fourni par le conducteur, et sont réalisés sous forme d'une unité (22, 29), l'unité (22, 29) étant disposée en tant qu'un module sur la partie terminale côté volant d'une vanne de direction (14, 66) de la direction assistée hydraulique.

2. Direction assistée selon la revendication 1, **caractérisée en ce que** l'actionneur (23, 30, 44) générateur de couple additionnel comprend un moteur électrique (23) qui est accouplé à la colonne de direction (2).

3. Direction assistée selon la revendication 1 ou 2, **caractérisée en ce que** les moyens d'application active du couple de direction additionnel comprennent un moteur électrique (23), une unité redondante de commande et de régulation électronique (ECU) (24), et un capteur redondant (25) du couple de direction.

4. Direction assistée selon l'une des revendications 1 à 3, **caractérisée en ce que** les moyens (23, 24, 25, 26, 28) d'application active d'un couple additionnel de direction comprennent une transmission (28) qui coopère avec l'actionneur (23, 30, 44) générateur de couple additionnel.

5. Direction assistée selon la revendication 4, **caractérisée en ce que** la transmission (28) est une transmission à courroie, à engrenages hélicoïdaux / à vis sans fin, ou une transmission à engrenages parallèles.

6. Direction assistée selon l'une des revendications 1 à 5, **caractérisée en ce que** l'actionneur (23, 30, 44) générateur de couple additionnel produit, grâce à une commande par une unité de commande et de régulation électronique (ECU)(24), un couple additionnel de direction adapté à la vitesse momentanée du véhicule.

7. Direction assistée selon l'une des revendications 1 à 6, **caractérisée en ce que** l'actionneur (23, 30, 44) générateur de couple additionnel produit, grâce à une commande par une unité de commande et de régulation électronique (ECU)(24), un couple additionnel de direction adapté au cap du véhicule et à la trajectoire.

8. Direction assistée selon l'une des revendications 1 à 7, **caractérisée en ce que** l'actionneur (23, 30, 44) générateur de couple additionnel produit, grâce à une commande par une unité de commande et de régulation électronique (ECU)(24), un couple additionnel de direction adapté à la dynamique momentanée du véhicule, en particulier à l'accélération transversale momentanée.

9. Direction assistée selon l'une des revendications 1 à 8, **caractérisée en ce que** l'actionneur (23, 30, 44) générateur de couple additionnel est un actionneur électromécanique, électromagnétique ou hydraulique.
